# EUROPEAN PATENT APPLICATION

(11) **EP 4 015 112 A1**
(43) Date of publication of application: **22.06.2022**
(21) Application number: 20214146.1
(22) Date of filing: 15.12.2020
(51) Int. Cl.: B22F 10/28, B22F 10/37, B22F 12/50, B22F 12/57, B22F 12/60, B29C 64/153, B29C 64/205, B29C 64/321, B29C 64/343, B33Y 10/00, B33Y 30/00, B23K 15/00, B23K 26/342

(54) **METHOD AND APPARATUS FOR THE ADDITIVE MANUFACTURE OF A WORKPIECE**

(71) Applicant: Siemens Energy Global GmbH & Co. KG, 81739 München (DE)
(72) Inventor: Rule, David, 20537 Hamburg (DE); Schurb, Julius, 14169 Berlin (DE)

(57) **Abstract**

The present invention relates to a method for the additive manufacture of a workpiece by selectively melting or sintering a powder using an apparatus (1) comprising a horizontal build table (2) extending in X- and Y-direction and being movable in Z-direction, a powder spreading device (3) extending in X-direction and being movable in Y-direction over the build table (2), and a laser or electron beam source (4). Moreover, the invention relates to a corresponding apparatus.

## Description

The present invention relates to a method for the additive manufacture of a workpiece by selectively melting or sintering a powder using an apparatus comprising a horizontal build table extending in X- and Y-direction and being movable in Z-direction, a powder spreading device extending in X-direction and being movable in Y-direction over the build table, and a laser or electron beam source, the method comprising the steps of a) depositing an elongate powder bead in X-direction between the powder spreading device and the build table, b) spreading the powder bead deposited in step a) over the build table by moving the spreading device in Y-direction over the build table; c) selectively melting or sintering the powder arranged on the build table by the electron or laser beam in order to create a cross section layer of the workpiece; d) lowering the build table and e) repeating steps a) to d) until the desired geometry of the workpiece is achieved.

The additive manufacture or 3D-printing of a workpiece by selectively melting or sintering a powder is known in prior art. The three-dimensional workpiece is formed layer by layer by successive fusion of selected areas of powder layers arranged on a build table extending in X- and Y-direction, wherein the fusion is realized by moving an electron or laser beam over the selected areas. Prior to each fusion step it is necessary to spread a powder layer over the build table. This is realized in step a) by depositing an elongate powder bead in X-direction between a powder spreading device and the build table, and by spreading the deposited powder bead in step b) over the build table by moving said powder spreading device in Y-direction over the build table. The powder spreading device is typically a scraper or a drum extending in X-direction and positioned a predetermined distance above the build table, wherein the predetermined distance corresponds to powder deposition thickness, with which the powder is to be spread on the build table. The powder deposition thickness is larger than the thickness of the workpiece layer to be manufactured by fusion, because the density of the fused workpiece layer is much higher than the density of the bulk density of the powder. The deposition thickness of metal powder is for example about twice as thick as the thickness of the fused final workpiece layer, because the density of metal powder versus solid metal material is roughly the factor two. In other words, if the final thickness of the workpiece layer is "D", the powder deposition thickness is "2D". In order to ensure that there is always enough powder arranged on the build table for performing the subsequent fusion step c), the total powder quantity to be deposited in step a) is normally determined once and corresponds to the maximum amount of powder for fusing a workpiece layer covering the entire surface of the built area, i.e. the surface size of the build table multiplied by the desired powder deposition thickness, plus a certain loss and safety margin, whereupon the determined total powder quantity is deposited in each step a) as a uniform powder bead. Excess powder is dumped by the powder spreading device in a waste container arranged behind the build table. This powder is lost for the process and must be sieved and conditioned in order to make it reusable. In step c) the powder arranged on the build table in step b) is selectively sintered or melted by an electron or laser beam in order to create the desired cross section layer of the workpiece. Thereafter, the build table is lowered in step d) by the amount of the thickness of the created workpiece layer, whereupon steps a) to d) are repeated until the desired geometry of the workpiece is achieved.

Against this background it is an object of the present invention to provide an improved method of the above-mentioned kind.

In order to solve this object the present invention provides a method of the above-mentioned kind, wherein each powder bead deposited in step a) comprises a specific total powder quantity and a specific powder quantity distribution within the powder bead along the X-direction, which are calculated separately for each cross section layer of the workpiece. The invention provides for the fact that the powder demand for creating the single cross-section layers of a workpiece in step c) is not constant when the cross-section layers have varying geometries. Accordingly, the total powder quantity to be deposited in step a) as well as the distribution of this total powder quantity along the X-direction, i.e. within the powder bead, are determined or rather calculated separately for each cross-section layer of the workpiece in order to adapt the powder deposition in step a) to the actual powder demand necessary in step c) to fuse the next workpiece layer. Accordingly, the quantity of dumped powder - depending on the workpiece geometry - can be significantly reduced. This goes along with a reduction of the manufacturing costs.

Preferably, the calculated total powder quantity includes a safety margin in order to ensure that there is always enough powder spread on the built table after having performed step b) to create the next workpiece layer(s) in step c).

According to one embodiment of the method according to the present invention the calculated total powder quantity and the calculated powder quantity distribution consider excess powder remaining on the build table after fusing the last cross section layer of the workpiece as well as the position of the excess powder on the build table. This further reduces the amount of dumped powder.

According to an embodiment of the method according to the present invention the calculated total powder quantity to be deposited in step a) is metered by a powder metering unit.

Preferably, the calculated powder quantity distribution to be realized in step a) is adjusted by a powder distribution unit.

According to one alternative of the present invention the powder distribution unit comprises nozzles to adjust the calculated powder quantity distribution.

According to another alternative of the present invention the powder distribution unit comprises a mechanical deflection device to adjust the calculated powder quantity distribution, said mechanical deflection device deflecting powder falling down under the influence of gravity.

Moreover, the present invention provides an additive manufacture apparatus for the additive manufacture of a workpiece by selectively melting or sintering a powder, comprising a horizontal build table extending in X- and Y-direction and being movable in Z-direction, a powder spreading device extending in X-direction and being movable in Y-direction over the build table, a laser or electron beam source, a powder metering unit, a powder distribution unit and a control system, wherein the control system is designed to calculate for each powder bead to be deposited in step a) the specific total powder quantity and the specific powder quantity distribution on the basis of the cross section layer of the workpiece to be manufactured with said powder bead in step c), wherein the metering unit is designed to meter the calculated total powder quantities received from the control system, and wherein the distribution unit is designed to distribute the powder in accordance with the calculated powder quantity distribution received from the control system.

According to one alternative of the present invention the powder distribution unit comprises nozzles to adjust the calculated powder quantity distribution.

According to another alternative of the present invention the powder distribution unit comprises a mechanical deflection device to adjust the calculated powder quantity distribution, said mechanical deflection device deflecting powder falling down under the influence of gravity.

Preferably, the powder metering unit and the powder distribution unit are realized as a single powder metering and distribution unit, said powder metering and distribution unit being connected to a powder reservoir and being movable back and forth in X-direction. The powder metering and distribution unit is advantageously capable of delivering powder with different volume flow rates, wherein the volume flow rates are preferably steplessly adjustable by the control system.

Further features and advantages of the present application will become apparent by the following description of different embodiments of methods according to the present invention with reference to the drawing.
Figure 1 is a schematic perspective view of an additive manufacturing apparatus illustrating a first step of known method for the additive manufacture of a workpiece.
Figure 2 is a schematic perspective view of the additive manufacturing apparatus of figure 1 illustrating a second step of said known method.
Figure 3 is a schematic perspective view of the additive manufacturing apparatus of figure 1 illustrating a third step of said known method.
Figure 4 is an enlarged view of a section of figure 3 showing an upper surface of a workpiece layer created during the third method step.
Figure 5 is a top view of the build table showing a first workpiece layer to be manufactured in broken lines.
Figure 6 is a front view of a powder bead for manufacturing the workpiece shown in figure 5, said powder bead having a powder quantity distribution according to an embodiment of the present invention.
Figure 7 is a front view of a powder bead for manufacturing once again the workpiece shown in figure 5, said powder bead also having a powder quantity distribution according to an embodiment of the present invention.
Figure 8 is a schematic perspective view of an additive manufacturing apparatus according to a first embodiment of the present invention, which is equipped with a combined powder metering and distribution unit.
Figure 9 is a schematic perspective view of an additive manufacturing apparatus according to a second embodiment of the present invention, which is equipped with a powder metering unit and with a powder distribution unit.
Figure 10 is a schematic perspective view of an additive manufacturing apparatus according to a third embodiment of the present invention.
Figure 11 is a schematic perspective view of an additive manufacturing apparatus according to a fourth embodiment of the present invention.

In the following same reference numerals denote same or similar components.

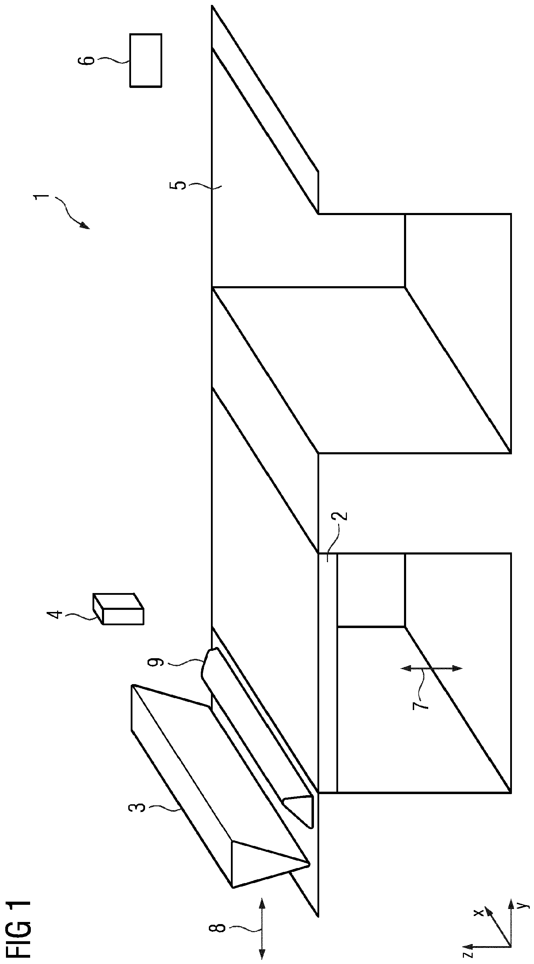

Figures 1 to 3 show an additive manufacturing apparatus 1 for the additive manufacture of a workpiece by selectively melting or sintering a powder. The apparatus 1 comprises a horizontal build table 2, a powder spreading device 3, a laser or electron beam source 4, a waste powder container 5 and a control system 6. The build table 2 extends in X- and Y-direction and is movable in Z-direction as indicated by double arrow 7 in figure 1. The powder spreading device 3, which is shown in its initial position in figure 1, extends in X-direction and is movable back and forth in Y-direction over the build table 2, as indicated by double arrow 8. The powder spreading device 3 is presently realized in the form of a scraper. However, it can also have the form of a drum or the like. The laser or electron beam source 4 is movable in X- and Y-direction, if necessary also in Z-direction, e.g. for focusing the beam or the like. Moreover, the apparatus 1 comprises a metering unit, which is not shown in figures 1 to 3.

In order to manufacture a workpiece, an elongate uniform bead 9 of e.g. metal powder is normally deposited in X-direction between the powder spreading device 3 and the build table 2 as shown in figure 1.

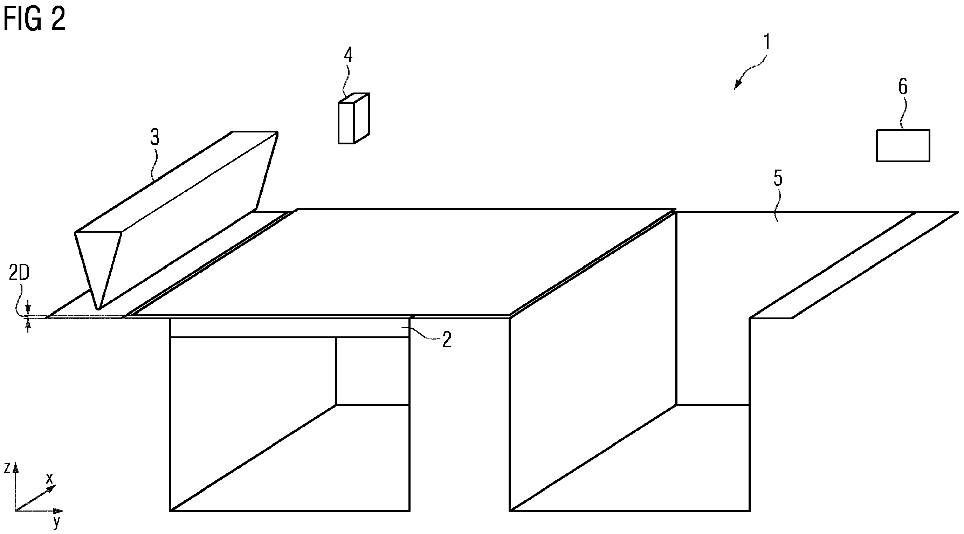

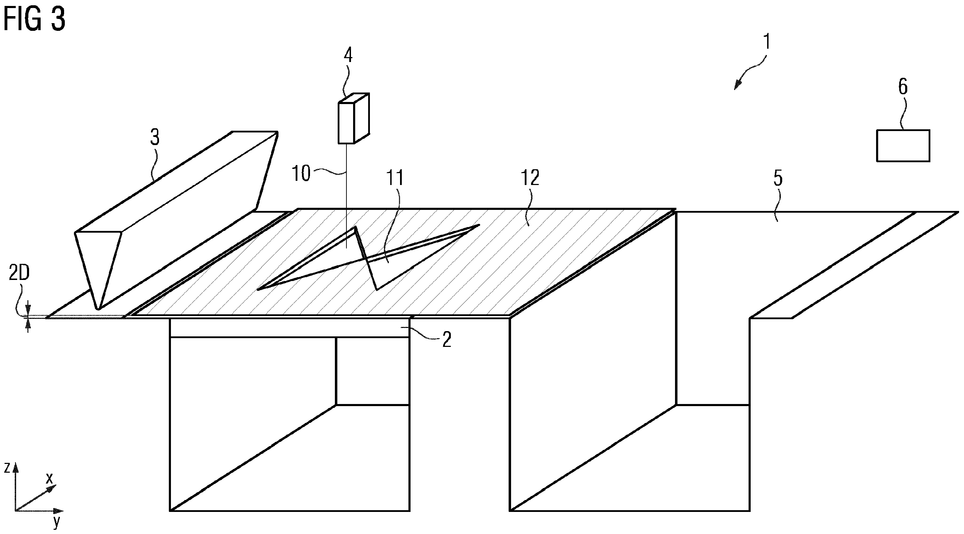

In a second step b) the powder bead 9 deposited in step a) is spread over the build table 2 by moving the powder spreading device 3 in Y-direction over the build table 2. Thereafter, the powder spreading device 3 is returned in its initial position as shown in figure 2. In the present example, the total powder quantity contained in the powder bead 9 deposited in each step a) is calculated in such a manner, that the powder is spread in step b) with a uniform thickness of 2D across the entire build table 2, as shown in figures 2 and 3. For this purpose the powder spreading device 3 is arranged in a distance 2D above the build table 2.

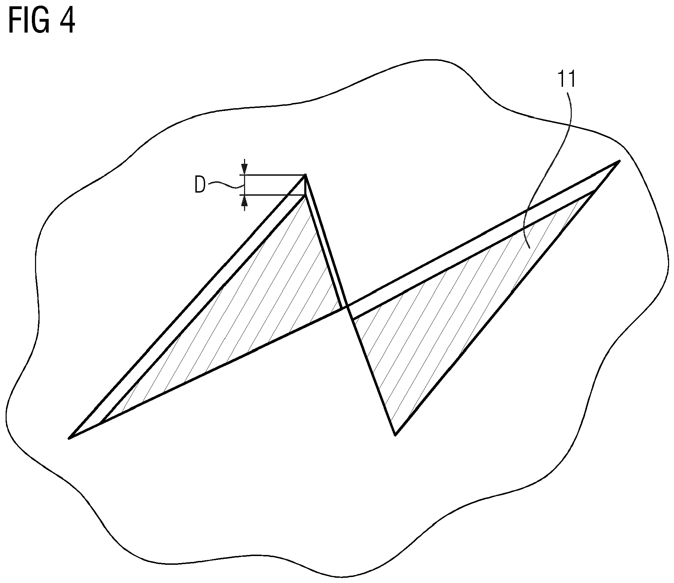

Next, the powder arranged on the build table 2 is selectively melted in step c) by means of a laser or electron beam 10 emitted by the laser or electron beam source in order to create a fused cross section layer 11 of the workpiece. Figure 4 shows the upper surface of the fused workpiece layer 11 as a hatched surface. As can be seen in figure 4, this upper surface is arranged underneath the surrounding powder, presently with an offset D. This offset is created due to the fact, that the density of metal powder versus the density of the fused metal material of the fused workpiece layer 11 is roughly the factor two.

In the following step d) the build table 2 is lowered in negative Z-direction by an amount corresponding to the thickness of the fused workpiece layer 11, i.e. by the amount D.

Thereafter, the method starts again with step a) in order to manufacture the next workpiece layer 11. The total powder quantity of the powder bead 9 created in this step a) corresponds to the total powder quantity of the powder bead 11 created in the foregoing step a). The excess powder is then automatically dumped in the waste powder container 5 when performing step b). The volume of this excess powder corresponds to the powder surface area 12 illustrated in hatched lines in figure 3 multiplied by the thickness D. Dumped powder needs to be sieved and conditioned in order to make it reusable for the process.

In order to reduce the amount of dumped powder, the present invention proposes to calculate the total powder quantity to be deposited in step a) and a powder quantity distribution along the X-direction of said total powder quantity separately for each cross section layer 11 of the workpiece and to deposit the powder bead 9 in step a) with the calculated total powder quantity and with the calculated powder quantity distribution as it is described by way of example in the following.

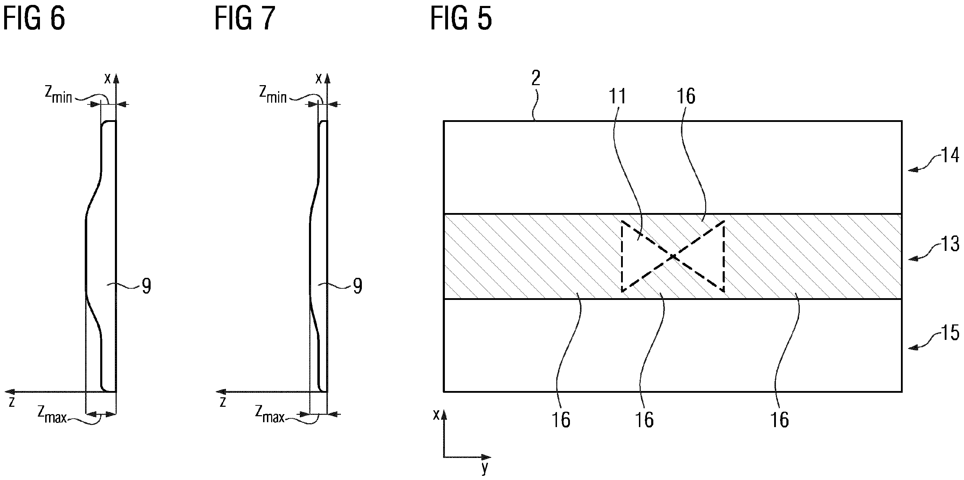

Figure 5 shows a top view of the build table 2 extending in X- and Y-direction, wherein a first workpiece layer 11 to be produced is illustrated in broken lines. Figure 6 illustrates a side view of the powder bead 9 to be deposited in step a) and to be used in step c) for the fusion of said first workpiece layer 11. According to the present invention, the total powder quantity of the powder bead 9 shown in figure 6 as well as its powder quantity distribution in X-direction are calculated specifically for the workpiece layer 11 of figure 5. Shortly summarized, the middle path 13 on the build table 2 needs be covered during step b) with a powder layer thickness of 2D, because the middle path 13 comprises the workpiece layer 11 to be manufactured. Against this background, as shown in figure 6, the powder quantity distribution has a maximum height zₘₐₓ over the length of the middle path 13 in X-direction, said maximum height zₘₐₓ being calculated to provide enough powder for covering the entire middle path 13 with a powder thickness of 2D in step b). The two side paths 14 and 15 next to the middle path 13 do not comprise parts of the workpiece layer 11 to be manufactured. Accordingly, the side paths 14 and 15 have to be covered in step b) with a powder layer thickness of only D. Thus, the powder quantity distribution has - besides transition heights - a minimum height zₘᵢₙ over the length of the side paths 14 and 15 in X-direction, see figure 6, said minimum height zₘᵢₙ being calculated to provide enough powder for covering the entire side paths 14 and 15 with a powder thickness of D in step b).

In order to manufacture the first workpiece layer 11 shown in figure 5, the total powder quantity and the powder quantity distribution of the powder bead 9 are calculated on the basis of the size, geometry and position of the first workpiece layer 11 to be manufactured using the control system 6 of the apparatus 1. This calculation may include safety margins. Then, the powder bead 9 is deposited as calculated in step a) in X-direction between the powder spreading device 3 and the build table 2 to achieve the arrangement shown in figure 3 with a powder bead 9 having the configuration as shown in figure 6.

In a second step b) the powder bead 9 deposited in step a) is spread over the build table 2 by moving the powder spreading device 3 in Y-direction over the build table 2. Thereafter, the powder spreading device 3 is returned in its initial position.

Next, the powder arranged on the build table 2 is selectively melted in step c) by means of the laser or electron beam 10 emitted by the laser or electron beam source 4 in order to create the cross section layer 11 of the workpiece shown in figure 5 in broken lines. Remaining excess powder is indicated in figure 5 by the hatched powder surface areas 16. The volume of this excess powder corresponds to the hatched powder surface areas 16 multiplied by the thickness D.

In the following step d) the build table 2 is lowered in negative Z-direction by an amount corresponding to the thickness of the fused workpiece layer 11, i.e. by the amount D.

Thereafter, the total powder quantity as well as the powder quantity distribution necessary to create a second workpiece layer 11 are calculated. This calculation considers the quantity of the excess powder that remained on the build table 2 after performing the last step c) as well as the position of the excess powder on the build table 2. If, for example, the same workpiece cross section layer 11 is to be manufactured one more time as the second workpiece layer 11, this results in a significantly flattened powder bead 9 according to figure 7 having a lower total powder quantity as well as a lower zₘₐₓ as the powder bed 9 shown in figure 6. Then, the method again starts with step a), where the corresponding powder bead 9 is deposited. Excess powder is automatically dumped in the waste powder container after having spread the powder bead 9 over the build table 2 by means of the powder spreading device 3 in step b). However, the quantity of this excess powder is merely insignificant.

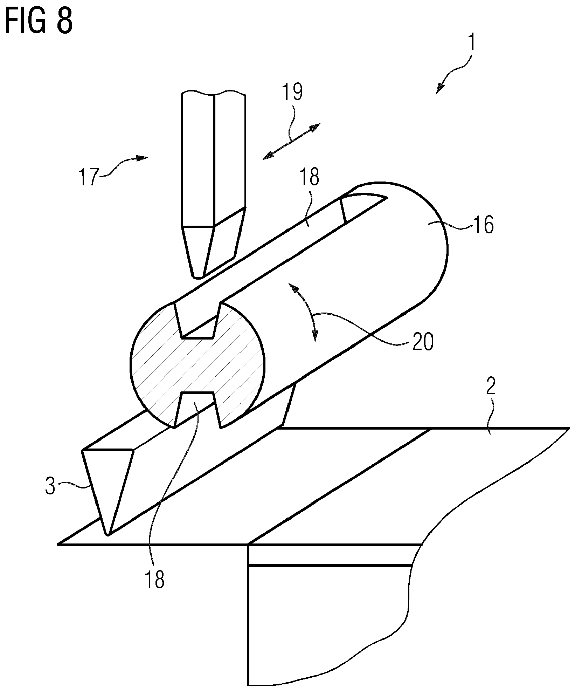

Figures 8 to 11 show several possibilities according to the present invention for creating powder beads 9 having different total powder quantities as well as different powder quantity distributions along the X-direction.

Figure 8 shows an arrangement comprising an oblong rotatable cylinder and a combined powder metering and distribution unit 17. The cylinder 16 extends in X-direction and is arranged above the powder spreading device 3 slightly offset in Y-direction towards the build table 2. On opposite sides of the cylinder barrel two longitudinal powder receiving grooves 18 are provided, whose lengths approximately correspond the length of the build table 2 in X-direction. The powder metering and distribution unit 17 is positioned directly above the cylinder 16 and is movable back and forth in X-direction, as shown by double arrow 19. The powder metering and distribution unit 17 is connected to a powder reservoir, which is not shown in the figure, and is designed for filling powder in the upper groove 18 of the cylinder 16 while moving in X-direction, wherein the powder volume flow rate can be varied by the powder metering and distribution unit 17 itself or by varying the speed of movement of the powder metering and distribution unit 17 in X-direction while filling powder in the groove 18 with a constant volume flow rate. The powder metering and distribution unit 17 receives the calculated total powder quantity and the calculated powder quantity distribution from the control system 6, meters the calculated total powder quantity and fills the groove 18 with a powder bead having the desired powder distribution in X-direction. After having filled the groove 18 with powder, the cylinder 16 can be rotated by 180°, see arrow 20, in order to dump the powder between the powder spreading device 3 and the build table 2. Then, a condition as shown in figures 6 and 7 is achieved, so that the method as described above can be started. Please note, that the cylinder 16 can be omitted. Instead, the powder bead 9 can be deposited directly between the powder spreading device 3 and the build table 2 by the powder metering and distribution unit 17. However, the use of the cylinder 16 is preferred in order to prepare the next powder bead while the present powder bead is processed.

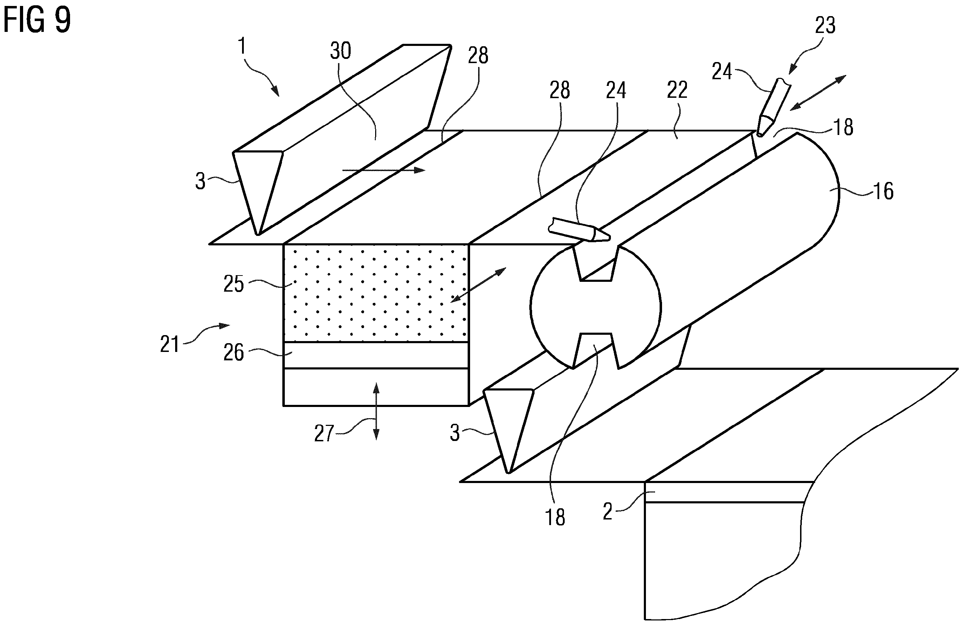

Figure 9 shows an arrangement comprising a cylinder 16, a powder metering unit 21, a further powder spreading device 3, a horizontal connection plate 22 and a powder distribution unit 23 comprising several nozzles 24. The cylinder 16 has the same design as the one shown in figure 8. The powder metering unit 21 comprises a powder reservoir 25 and a table 26 arranged within the powder reservoir 25 and being movable in Z-direction as indicated by double arrow 27, wherein the powder is arranged on the table 26. The upper edges 28 of the powder reservoir 25 are arranged above the cylinder 16, and the connection plate 22 is connected to one upper edge 28 of the powder reservoir 25 and ends above the upper groove 18 of the cylinder 16. The further powder spreading device 3 serves for moving powder from the powder reservoir 25 in the upper groove 18 of the cylinder 16. The nozzles 24 of the powder distribution unit 23 are presently directed towards the upper groove 18 of the cylinder 16 and are movable back and forth in X-direction as indicated by double arrow 29. They are designed to distribute powder received as a continuous powder bead in the upper groove 18 in accordance with the calculated powder quantity distribution received by the control system 6. The nozzles 24 are preferably driven by an inert gas, such as argon or the like. In order to deposit a powder bead 9 as shown in figure 6 or 7 between the lower spreading device 3 and the build table 2 as shown in figure 3, the table 26 of the powder metering unit 21 is lifted in Z-direction by such a distance, that the calculated total powder quantity received from the control system 6 projects over the upper edges 28 of the powder reservoir 25 in Z-direction. Then, the upper powder spreading device 3 is moved in Y-directing, see arrow 30, over the powder reservoir 25 and the connection plate 22 in order to push this total powder quantity over the edge of the connection plate 22 into the groove 18 of the cylinder 16. Then, the nozzles 24 are activated to distribute the powder received in the groove 18 in X-direction in accordance with the calculated powder quantity distribution received from the control system 6. Subsequently the cylinder 16 is turned by 180° to dump the powder bead 9 between the lower powder spreading device 3 and the build table 2. Then, a condition as shown in figures 6 and 7 in combination with figure 3 is achieved, so that the method as described above can be started.

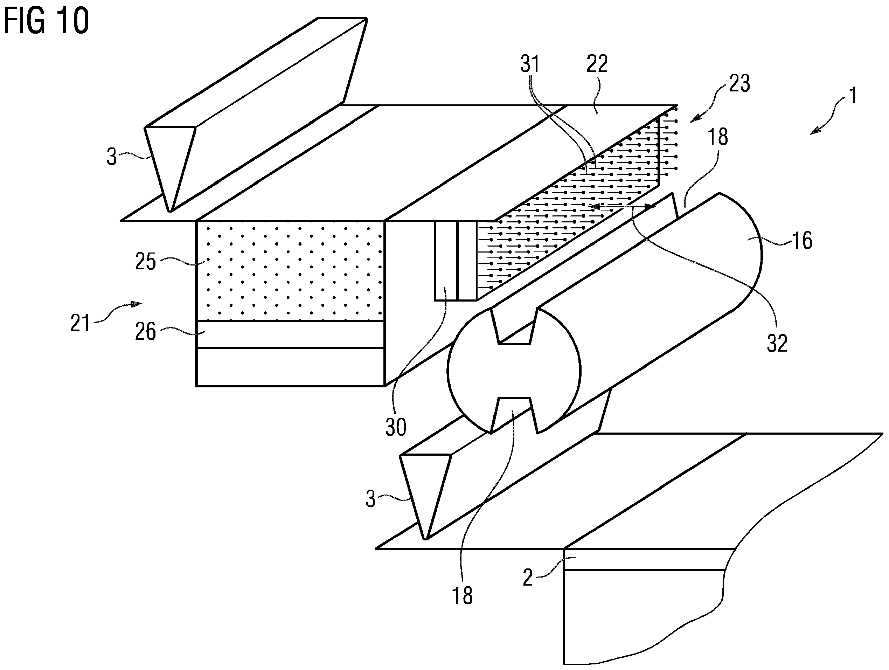

Figure 10 shows an arrangement comprising a cylinder 16, a powder metering unit 21, a further powder spreading device 3, a horizontal connection plate 22 and a powder distribution unit 23. The cylinder 16 has the same design as the one shown in figure 8. The powder metering unit 21, the further powder spreading device 3 and the connection plate 22 have the same design as the ones shown in figure 9. The powder distribution unit 23 comprises a mechanical deflection device 30 to adjust the calculated powder quantity distribution, said mechanical deflection device 30 deflecting the powder while falling down under the influence of gravity from the connection plate 22 into the upper groove 18 of the cylinder 16. The deflection device 30 presently comprises a plurality of pins 31 arranged in a matrix pattern, each of said pins 31 being movable back and forth in Y-direction, see double arrow 32, in order to selectively move the pins 31 in or out of the way of the falling powder. Powder falling on the pins 31 is deflected in X-direction. In order to deposit a powder bead 9 as shown in figure 6 or 7 between the lower spreading device 3 and the build table 2 as shown in figure 3, the table 26 of the powder metering unit 21 is lifted in Z-direction by such a distance, that the calculated total powder quantity received from the control system 6 projects over the upper edges 28 of the powder reservoir 25 in Z-direction. Then, the upper powder spreading device 3 is moved in Y-directing over the powder reservoir 25 and the connection plate 22 in order to push this total powder quantity over the edge of the connection plate 25 into the groove 18 of the cylinder 16. Then, the pins 31 of the mechanical deflection device 30 are controlled to deflect the falling powder in such a manner, that the calculated powder quantity distribution received from the control system 6 is realized. Subsequently the cylinder 16 is turned by 180° to dump the powder bead 9 between the lower powder spreading device 3 and the build table 2. Then, a condition as shown in figures 6 and 7 in combination with figure 3 is achieved, so that the method as described above can be started. Please note, that the defection device 30 also can use gas streams instead of pins 31 in order to deflect the powder while falling down into the groove 18 of the cylinder 16. Nozzles may be arranged to create such gas streams, preferably gas streams of inert gas.

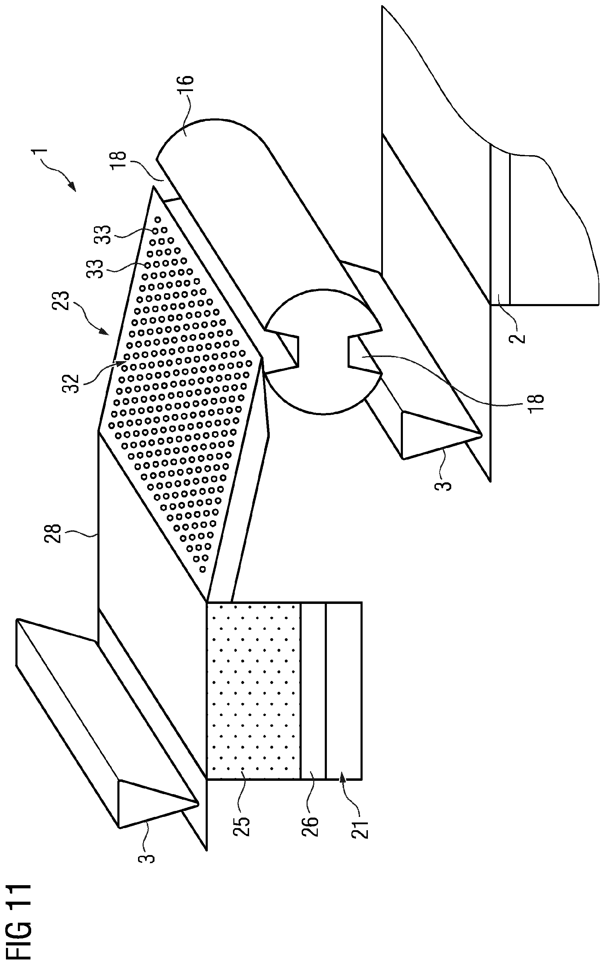

Figure 11 shows an arrangement comprising a cylinder 16, a powder metering unit 21, a further powder spreading device 3 and a powder distribution unit 23. The cylinder 16 has the same design as the one shown in figure 8. The powder metering unit 21 and the further powder spreading device 3 have the same design as the ones shown in figure 9. The powder distribution unit 23 comprises a downwardly inclined fluidized bed 32, which is connected to one edge of the powder reservoir 25 and ends above the upper groove 18 of the cylinder 16. The fluidized bed 32 has a plurality of holes 33, through which a fluidization medium, such as an inert gas, is selectively blown. In order to deposit a powder bead 9 as shown in figure 6 or 7 between the lower spreading device 3 and the build table 2 as shown in figure 3, the table 26 of the powder metering unit 21 is lifted in Z-direction by such a distance, that the calculated total powder quantity received from the control system 6 projects over the upper edges 28 of the powder reservoir 25 in Z-direction. Then, the upper powder spreading device 3 is moved in Y-directing in order to push this total powder quantity to the fluidized bed 32. Then, the powder moves down the bed 32 following the influence of gravity. On its way down the powder is subjected to the fluidizing medium selectively blown upwards through the holes 33 in such a manner, that the powder receives the calculated powder quantity distribution received from the control system 6 when deposited in the groove 18 of the cylinder 16. Subsequently the cylinder 16 is turned by 180° to dump the powder bead 9 between the lower powder spreading device 3 and the build table 2. Then, a condition as shown in figures 6 and 7 in combination with figure 3 is achieved, so that the method as described above can be started.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. A method for the additive manufacture of a workpiece by selectively melting or sintering a powder using an apparatus (1) comprising a horizontal build table (2) extending in X- and Y-direction and being movable in Z-direction, a powder spreading device (3) extending in X-direction and being movable in Y-direction over the build table (2), and a laser or electron beam source (4), the method comprising the steps of
a) depositing an elongate powder bead (9) in X-direction between the powder spreading device (3) and the build table (2),
b) spreading the powder bead (9) deposited in step a) over the build table (2) by moving the powder spreading device (3) in Y-direction over the build table (2),
c) selectively melting or sintering the powder arranged on the build table (2) by the electron or laser beam (10) in order to create a cross section layer of the workpiece,
d) lowering the build table (2), and
e) repeating steps a) to d) until the desired geometry of the workpiece is achieved, wherein each powder bead (9) deposited in step a) comprises a specific total powder quantity and a specific powder quantity distribution within the powder bead (9) along the X-direction, which are calculated separately for each cross section layer (11) of the workpiece.

2. Method according to claim 1, wherein the calculated total powder quantity includes a safety margin.

3. Method according to claim 1 or 2, wherein the calculated total powder quantity and the calculated powder quantity distribution consider excess powder remaining on the build table after fusing the last cross section layer (11) of the workpiece as well as the position of the excess powder on the build table (2).

4. Method according to one of the foregoing claims, wherein the calculated total powder quantity to be deposited in step a) is metered by a powder metering unit (17; 21) .

5. Method according to one of the foregoing claims, wherein the calculated powder quantity distribution to be realized in step a) is adjusted by a powder distribution unit (17; 23).

6. Method according to claim 5, wherein the powder distribution unit (23) comprises nozzles to adjust the calculated powder quantity distribution.

7. Method according to claim 5, wherein the powder distribution unit (23) comprises a mechanical deflection device (30) to adjust the calculated powder quantity distribution, said mechanical deflection device (30) deflecting powder while falling down under the influence of gravity.

8. Additive manufacture apparatus (1) for the additive manufacture of a workpiece by selectively melting or sintering a powder, comprising a horizontal build table (2) extending in X- and Y-direction and being movable in Z-direction, a powder spreading device (3) extending in X-direction and being movable in Y-direction over the build table (2), a laser or electron beam source (4), a powder metering unit (17; 21), a powder distribution unit (17; 23) and a control system (6), wherein the control system (6) is designed to calculate for each powder bead (9) to be deposited in step a) the specific total powder quantity and the specific powder quantity distribution on the basis of the cross section layer (11) of the workpiece to be manufactured with said powder bead (9) in step c), wherein the metering unit (17; 21) is designed to meter the calculated total powder quantities received from the control system (6), and wherein the distribution unit (17; 23) is designed to distribute the powder in accordance with the calculated powder quantity distribution received from the control system (6).

9. Apparatus (1) according to claim 8, wherein the powder distribution unit (23) comprises nozzles to adjust the calculated powder quantity distribution.

10. Apparatus (1) according to claim 8, wherein the powder distribution unit (23) comprises a mechanical deflection device (30) to adjust the calculated powder quantity distribution, said mechanical deflection device (30) deflecting powder while falling down under the influence of gravity.

11. Apparatus (1) according to claim 8, wherein the powder metering unit and the powder distribution unit are realized as a single powder metering and distribution unit (17), said powder metering and distribution unit (17) being connected to a powder reservoir and being movable back and forth in X-direction.
